# EUROPÄISCHE PATENTSCHRIFT

(11) **EP 3 951 460 B1**
(45) Veröffentlichungstag und Bekanntmachung des Hinweises auf die Patenterteilung: **06.08.2025**
(21) Anmeldenummer: 21020305.5
(22) Anmeldetag: 11.06.2021
(51) Int. Cl.: G02B 6/38, H01R 13/59, G02B 6/44

(54) **STECKVERBINDERTEIL FÜR EINE OPTISCHE UND/ODER ELEKTRISCHE STECKVERBINDUNG**
CONNECTOR PART FOR AN OPTICAL AND / OR ELECTRICAL CONNECTION
PIÈCE DE CONNECTEUR ENFICHABLE POUR UNE CONNEXION ENFICHABLE OPTIQUE ET/OU ÉLECTRIQUE

(30) Priorität: 07.08.2020 AT 506652020
(43) Veröffentlichungstag der Anmeldung: 09.02.2022
(73) Patentinhaber: Neutrik AG, 9494 Schaan (LI)
(72) Erfinder: Koch, Matthias, 6840 Götzis (AT)
(74) Vertreter: Kaminski Harmann

(56) Entgegenhaltungen:
- DE-U1- 202017 006 800
- US-A- 4 795 229
- US-A1- 2002 183 777
- US-A1- 2004 223 720
- US-A1- 2017 212 308
- US-B1- 6 238 104

## Beschreibung

Die Erfindung betrifft ein Steckverbinderteil, insbesondere einen Kabelstecker, für eine optische und/oder elektrische Steckverbindung, welches zumindest ein Gehäuse und zumindest eine Spannhülse aufweist, die mittels einer lösbaren Schraubverbindung miteinander verbunden sind, wobei innerhalb des Gehäuses und/oder der Spannhülse eine Zugentlastungsanordnung für ein in den Steckverbinderteil geführtes Kabel angeordnet ist, die eine Zugentlastungshülse aufweist, die sich an einer äusseren Hülse abstützt.

Steckverbinderteile dieser Art sind an sich bekannt. Solche Steckverbinderteile für eine optische Steckverbindung werden z.B. unter dem Handelszeichen OpticalCon am Markt angeboten. Sie beinhalten auch eine Anordnung zur Zugentlastung, bei welcher durch das Kabel verlaufende Zugentlastungsfasern oder ähnliche Bauelemente mit Teilen des Steckverbinders verbunden sind, die mit einer Buchse oder einen komplementären Steckverbinderteil verriegelt sind und derart die Energie bzw. Daten übertragenden Fasern oder Litzen des Kabels von allfälligen Zugkräften entlasten.

Dazu können Zugentlastungselemente aus metallischem Werkstoff mit Hülsen im Steckverbinderteil verbunden sein, beispielsweise durch Verschweissen, Verlöten, Crimpen oder ähnliche Verbindungsmethoden. Diese Hülsen stützen sich dann an entsprechenden Strukturen am oder im Gehäuse des Steckverbinderteils ab.

Die US 4,795,229 zeigt eine bekannte Zugentlastungsbaugruppe für einen optischen Steckverbinder, welche mit einer ringförmigen Haltehülse zusammenwirkende ringförmige Halte- und Lagerelemente aufweist um eine Zugentlastung des Kabels bereitzustellen.

Die US 2017/212308 A1 offenbart ein Steckverbinderteil für eine optische und/oder elektrische Steckverbindung, welches zumindest ein Gehäuse für die optischen und/oder elektrischen Kontaktelemente und deren Träger und zumindest eine Spannhülse aufweist.

In der DE 3524105 A1 ist ein Kupplungsteil einer elektrischen Steckverbindung zum Durchverbinden einer elektrischen Leitung beschrieben, die in ihrer Seele mindestens zwei Adern und ein fadenförmiges Zugorgan aufweist. Das Zugorgan ist an einer bis über die Leitung ragende, sich zum leitungsseitigen Ende konisch verengende metallische Hülse fest anliegend angebracht. Um sein leitungsseitiges Ende und das Ende der Leitung ist ein aus Isoliermaterial bestehender Griffkörper herumgespritzt. Die Herstellung dieser Anordnung ist relativ aufwendig, da sowohl das Zugorgan als auch der Schirm der Leitung in einer Hinterschneidung des Ansatzes am Grundkörper festgelegt sind. Der Ansatz ist dafür mit zwei axial verlaufenden Nuten versehen, in die das Zugorgan und der zusammengedrehte Schirm eingelegt werden. Die Enden beider Teile werden umgeknickt. Sie liegen in der Hinterschneidung und werden dort durch die eng am Ansatz anliegende Hülse gehalten. Daher wurde bereits vorgeschlagen, dass das Ende des Zugorgans am freien, leitungsseitigen Ende der Hülse befestigt ist und die Enden der aus dem Kontaktträger herausragenden Kontaktelemente von einem Isolierkörper aus einem in erwärmtem Zustand fließfähigem und beim Erkalten spröde werdenden Material umgeben sind, der von der Hülse umschlossen ist.

In der DE 202004016541 U1 ist ein Adapter offenbart, zum Anschliessen der elektrischen Adern von einem elektrischen Kabel an einem elektrischen Steckverbinder, ebenso wie ein mit einem solchen Adapter ausgestatteter Steckverbinder. Das Schirmgeflecht des Kabels wird im Inneren des Adapters um einen Konusring um fast 180 Grad Auf das Kabel einwirkenden Zugkräfte werden auf das Schirmgeflecht übertragen, so dass die Zugentlastung von der Zugfestigkeit des Schirmgeflechts und von der Quetschwirkung abhängt, mit der das Schirmgeflecht zwischen dem oder den Konusringen und dem Rohrmantel des Adapters festgehalten wird. Vorgeschlagen wurde daher eine Art Konusring entgegen der Einsteckrichtung des Kabels verjüngt, wobei das auf der Mantelfläche des Konusringes zu liegende Schirmgeflecht um weniger als 90 Grad aus der axialen Ausrichtung des Kabels lediglich aufgebogen zu werden braucht. Ein Umbiegen des Schirmgeflechts um einen gegenüber 90 Grad grösseren Winkel ist nicht erforderlich.

Schliesslich ist in der WO 2011116194 A2 eine Kabelanordnung für eine elektronische Vorrichtung beschrieben, bei dem an einem Kabel ein spritzgegossenes Element an dessen einem Ende einer Isolierschicht befestigt ist. Weiters umfasst die Anordnung ein Verstärkungselement, das sich in der Isolierschicht entlang des wenigstens einen Leiters erstreckt und ein erstes Ende aufweist, das sich über das eine Ende der Isolierschicht erstreckt. Dieses erste Ende erstreckt sich ferner entlang der äußeren Oberfläche der Isolierschicht unter einer Vorspannungskraft nach hinten erstreckt, wodurch das Verstärkungselement so vorgespannt ist, dass beliebige zusätzliche Zugbeanspruchungen, die auf das Kabel ausgeübt werden, wenigstens anfangs von dem Verstärkungselement getragen werden. Ein Befestigungselement wird an das Verstärkungselement und die Isolierschicht gequetscht und verriegelt das vorgespannte erste Ende des Verstärkungselements mit dem einen Ende der Isolierschicht. Ein Teil des spritzgegossenen Elements ist über das erste Ende des Verstärkungselements und das Befestigungselement gegossen. Das Befestigungselement weist einen Flansch auf, der sich von dem Kabel radial nach außen erstreckt und in dem spritzgegossenen Element gehalten ist.

Wenn nun aber Zugentlastungselemente aus nichtmetallischen Werkstoffen verwendet werden sollen, beispielsweise bei Anwendungen im medizinischen Bereich, sind diese bekannten Verbindungsarten nicht mehr sicher anwendbar.

Aufgabe der vorliegenden Erfindung war es, die Nachteile des Standes der Technik zu überwinden und ein Steckverbinderteil zur Verfügung zu stellen, um auch mit nichtmetallischen Werkstoffen eine sichere und voll funktionale Zugentlastung für das mit dem Steckverbinderteil verbundene Kabel zu gewährleisten.

Diese Aufgabe wird durch eine Vorrichtung und ein Verfahren gemäss den Ansprüchen gelöst.

Die erfindungsgemässe Vorrichtung ist dazu dadurch gekennzeichnet, dass die Zugentlastungsanordnung eine sich nach vorne hin zumindest über einen Teil ihrer Länge trichterförmig öffnende Hülse aufweist, durch welche die Litzen oder Fasern des Kabels hindurchgeführt und darin mittels eines Vergusses aus ausgehärtetem Kunstharz fixiert sind.

Die Hülse umgibt die Enden von Litzen oder Fasern des in den Steckverbinderteil geführten Kabels, wobei eine fixierende Verbindung zwischen diesen Elementen und der Hülse, bevorzugt jedenfalls auch zwischen einem Zugentlastungselement des Kabels und der Hülse, vorhanden ist.

Gemäss einer bevorzugten Ausführungsform der Erfindung ist vorgesehen, dass die Hülse an der Vorderseite der Zugentlastungshülse aufgesetzt ist.

Eine vorteilhafte Ausführungsform des Steckverbinderteils ist dadurch gekennzeichnet, dass der Innenraum zumindest des trichterförmigen Abschnitts der Hülse mit dem ausgehärteten Kunstharz verfüllt ist.

Bevorzugt ist eine Ausführungsform, bei welcher der gesamte Innenraum der Hülse mit dem ausgehärteten Kunstharz verfüllt ist.

Gemäss einem optionalen Merkmal der Erfindung ist das Kunstharz aus der Gruppe der Reaktionsharze gewählt. Bevorzugtes Material ist Epoxyharz.

Bevorzugt ist eine Ausführungsform der Erfindung, gemäss welcher die Hülse allein über die Zugentlastungshülse an der äusseren Hülse abgestützt ist.

Ein allfälliger Schirm des Kabels kann gemäss einer bevorzugten Ausführungsform der Erfindung mit dem trichterförmigen Abschnitt der Hülse fest verbunden sein. Dies geschieht vorzugsweise durch Vercrimpen.

Zum besseren Verständnis der Erfindung wird diese anhand der nachfolgenden Figuren näher erläutert.

Es zeigen jeweils in stark vereinfachter, schematischer Darstellung:
- Fig. 1: eine Explosionsdarstellung eines Steckverbinderteils gemäss dem Stand der Technik;
- Fig. 2: eine andere Ausführungsform von Hülsen für die Zugentlastungsanordnung;
- Fig. 3: eine Explosionsdarstellung eines erfindungsgemässen Steckverbinderteils;
- Fig. 4: einen Längsschnitt durch den Steckverbinderteil der Fig. 3 mit einer anderen Abdeckung;
- Fig. 5: eine perspektivische Darstellung der inneren Bauteile der Zugentlastungsanordnung; und
- Fig. 6: einen Längsschnitt durch eine Steckverbindung des erfindungsgemässen Steckverbinderteils als Kabelstecker mit einem komplementären Steckverbinderteil in Form einer Chassisbuchse.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäss auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäss auf die neue Lage zu übertragen.

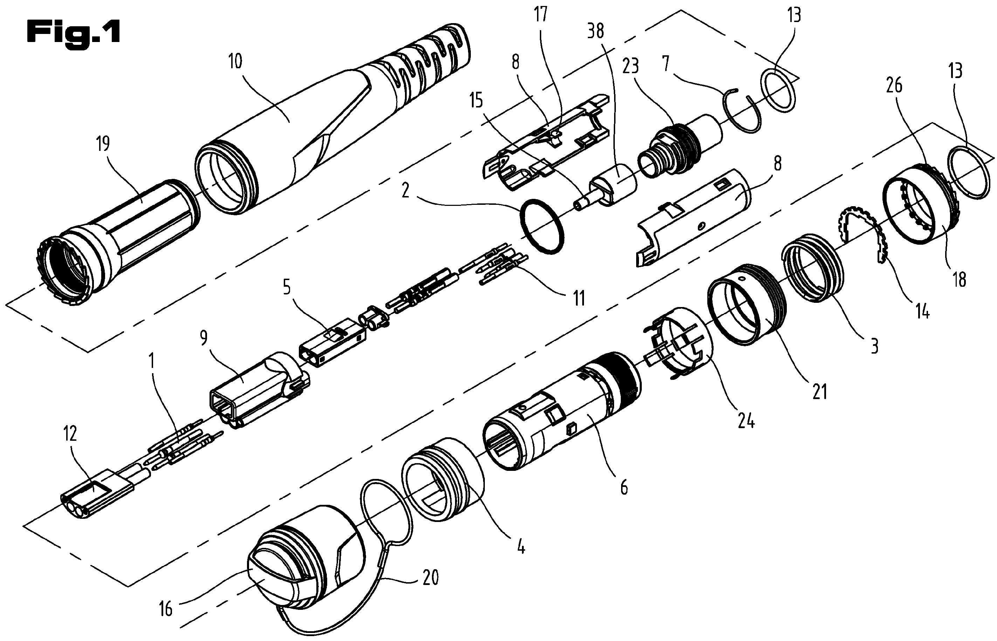

In der Fig. 1 ist eine herkömmliche Ausführungsform eines Steckverbinderteils, insbesondere eines Kabelsteckers, für eine optische und/oder elektrische Steckverbindung in Explosionsdarstellung abgebildet.

Es beinhaltet eine Zugentlastungsanordnung für das Kabel K (hier nicht dargestellt), das durch die Spannhülse 19 hindurch, vorzugsweise auch durch einen auf die Spannhülse 19 aufgeschobenen Knickschutz 10 hindurch, verläuft und durch die Zugentlastungshülse 23 in das Gehäuse 6 mündet. Die Zugentlastungsanordnung umfasst weiters noch eine kleine zentrale Crimphülse 15 und eine breitere Crimphülse 38 mit grösserem Umfang. Die Crimphülse 38 stützt sich auf der Zugentlastungshülse 23 ab und ist mit dem Schirm des Kabels K verbunden, während die zentrale Crimphülse 15 mit Zugentlastungselementen des Kabels K verbunden ist.

Die Zugentlastungshülse 23 stützt sich an den beiden Halbschalen 8 und diese stützen sich weiter an der Spannhülse 19 ab. An der Innenseite der Halbschalen 8 sind auch Haltevorsprünge 17 angeordnet, über welche sich die zentrale Crimphülse 15 an den Halbschalen 8 und weiter an der Spannhülse 19 abstützt. Weiters sind ein Rückschlussring 7 und ein Dichtring 13 am hinteren Abschnitt der Zugentlastungshülse 23 angeordnet.

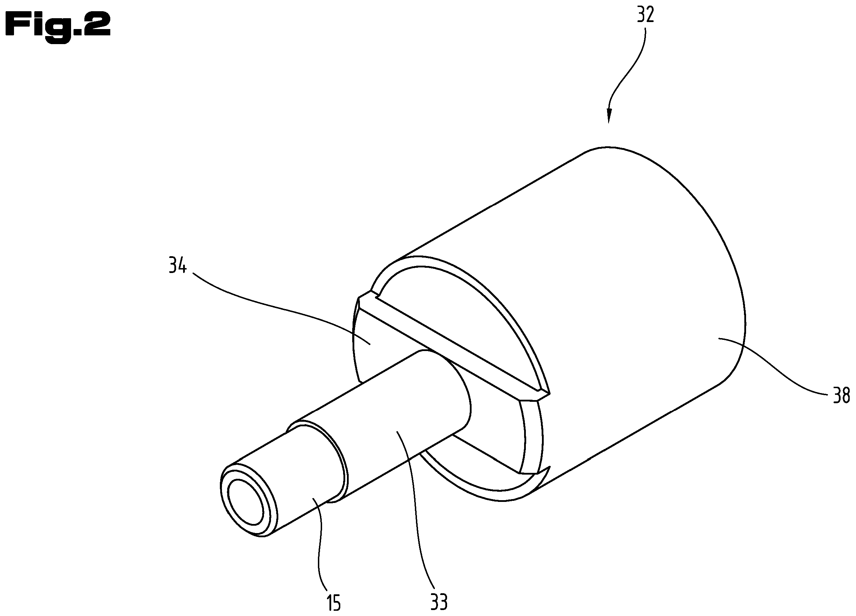

Eine andere Ausführungsform des Standes der Technik weist eine Zugentlastungsanordnung auf, bei welche die beiden separaten Crimphülsen 15 und 38 zu einem gemeinsamen Bauteil 32 (siehe Fig. 2) zusammengefasst sind. Dabei stützt sich die zentrale, kleine Crimphülse 15 über ein rohrförmiges Zwischenstück 33 und einen Quersteg 34 an der breiteren Crimphülse 38 ab. Das Bauteil 32 als Ganzes stützt sich wiederum in der bereits im Zusammenhang mit Fig. 1 erläuterten Weise an den Halbschalen 8 und damit weiter an der Spannhülse 19 ab.

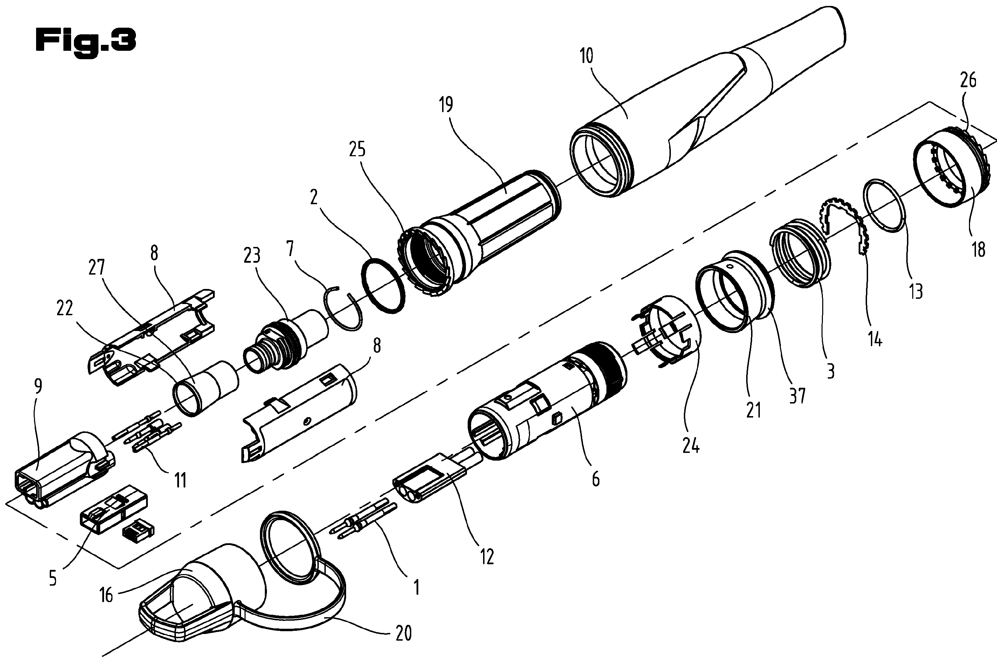

Eine bevorzugte Ausführungsform eines erfindungsgemässen Steckverbinders zeigt die Fig. 3, die nachfolgend im Detail erläutert wird.

Das Gehäuse 6 des erfindungsgemässen Steckverbinders ist übereinstimmend mit den bekannten Ausführungsformen mit einer Spannhülse 19 mittels einer lösbaren Schraubverbindung miteinander verbunden. Ein gegenüber dem Gehäuse 6 in Längsrichtung bewegbarer Sperrring 18 greift dabei mit einer Verzahnung 26 in eine fixe Verzahnung 25 der Spannhülse 19 ein. Diese fixe Verzahnung 25 kann relativ zur Spannhülse 19 nicht bewegt werden und ist vorzugsweise direkt daran ausgebildet bzw. angeformt oder als Zusatzteil zunächst gefertigt und dann entsprechend an der Spannhülse 19 fixiert.

Der Sperrring 18 auf dem Gehäuse 6 ist durch eine Vorspannfeder 3 beaufschlagt und in Richtungen parallel zur Längsrichtung des Gehäuses 6 verschiebbar gelagert. Die Vorspannfeder 3 spannt den Sperrring 18 in Richtung zu einer Eingriffsstellung seiner Verzahnung 26 mit der Verzahnung 25 der Spannhülse 19 vor. Hierdurch wird in der Eingriffsstellung ein versehentliches Aufschrauben der Schraubverbindung zwischen Gehäuse 6 und Spannhülse 19 blockiert. Um die Verschraubung lösen zu können, muss der Sperrring 18 entgegen der Vorspannung der Vorspannfeder 3 von der fixen Verzahnung 25 der Spannhülse 19 abgehoben werden, bis seine Verzahnung 26 und die Verzahnung 25 der Spannhülse 19 in diesem Freigabezustand dann nicht mehr in Eingriff sind. Beim Zusammenschrauben von Gehäuse 6 und Spannhülse 19 hingegen können die Verzahnungen 25, 26 entlang ihrer flachen Zahnflanken aneinander Abgleiten, wobei der Sperrring 18 automatisch entgegen der Wirkung der Vorspannfeder 3 bewegt wird.

Natürlich könnten alternativ aber auch andere Verbindungsformen zwischen Gehäuse 6 und Spannhülse 19 vorgesehen sein, wie z.B. ein Bajonettverschluss oder eine gesicherte Steckverbindung.

Die Verdrehsicherung des Sperrringes 18 gegenüber dem Gehäuse 6 wird durch einen Rastring 14 bewirkt, der am Gehäuse 6 drehfest befestigbar ist. Dabei weist der Sperrring 18 eine vorzugsweise innen, also in Richtung hin zum Gehäuse 6 liegende Abfolge von Zähnen auf, in welche die komplementär ausgebildete Aussenseite des Rastringes 14 eingreift, und die vorzugsweise einstückig am Sperrring 18 angeformt sind. Der Rastring 14 weist eine einseitig offene Aufnahmeöffnung auf, mit der er auf das Gehäuse 6 orthogonal zur dessen Längsrichtung aufgesteckt und verdrehsicher befestigt werden kann. Trotz dieser Verdrehsicherung ist der Sperrring 18 immer noch in Längsrichtung auf dem Gehäuse 6 verschiebbar gelagert.

In der Grifffläche des Sperrrings 18 befindet sich eine umlaufende Nut, in welcher ein Verlierschutz bzw. Befestigungselement 20 für eine Abdeckkappe 16 eingehängt sein kann. Diese Abdeckkappe 16 ist vorzugsweise mit einem Einsatz 4 ausgestattet.

Die Vorspannfeder 3 ist zwischen dem Sperrring 18 und einem ebenfalls in Längsrichtung auf dem Gehäuse 6 verschiebbaren Entriegelungsring 21 eingespannt. Der Entriegelungsring 21 ist Teil einer Ver- und Entriegelungsanordnung, mit welcher das erfindungsgemässe Steckverbinderteil nach Einstecken in ein komplementäres Steckverbinderteil, insbesondere eine Chassisbuchse, lösbar verriegelt werden kann, um ein unbeabsichtigtes Lösen der Steckverbindung zu verhindern.

Dazu ist eine Zughülse 24 mit dem Gehäuse 6 zumindest axial unverschieblich verbunden, die mit ihren axial nach vorne weisenden Laschen in komplementäre Haltestrukturen des komplementären Steckverbinderteils eingreift und diese zur Herstellung einer Rastverbindung hintergreift. Der Entriegelungsring 21 liegt über der Zughülse 24 und drückt, wenn er entgegen der Wirkung der Vorspannfeder 3 in Richtung auf den Sperrring 18 gezogen wird, die Laschen der Zughülse 24 radial nach innen hin und löst damit die Verriegelung mit dem komplementären Steckverbinderteil.

Der in Entriegelungsrichtung weisende Randbereich 37 des Entriegelungsringes 21 ist ausgehend von einer abgerundeten, in Umfangrichtung verlaufenden Senke deutlich hochgezogen, sodass er auch mit Handschuhen sicher ergriffen und nach hinten gezogen werden kann, um die Verriegelung zu einem komplementären Steckverbinderteil zu lösen. Das ist insbesondere für die Anwendung im medizinischen Bereich von Vorteil.

Ein an sich ebenfalls bekannter Dichtungsring 13 dichtet die Schraubverbindung zwischen dem Gehäuse 6 und der Spannhülse 19 ab, wenn diese beiden Bauteile zusammengeschraubt, also im verbundenen Zustand sind.

Im vorderen Abschnitt des Gehäuses 6 ist vorzugsweise ein Kontaktträger 12 für Adapterkontakte 1, beispielsweise zur elektrischen Übertragung von Daten über einige der Litzen 30 des Kabels K eingesetzt. Ein Halteelement 9 für vorzugsweise die Endstücke von Lichtleitern 29 des Kabels K ist am vorderen Abschnitt einer aus zwei Halbschalen 8 zusammengesetzten Hülse angeordnet. Es fungiert vorzugsweise gleichzeitig auch noch als Kontaktträger für elektrischen Kontaktelemente 11, vorzugsweise zur Energieübertragung, die ebenfalls über entsprechende Litzen 30 des Kabels K erfolgt.

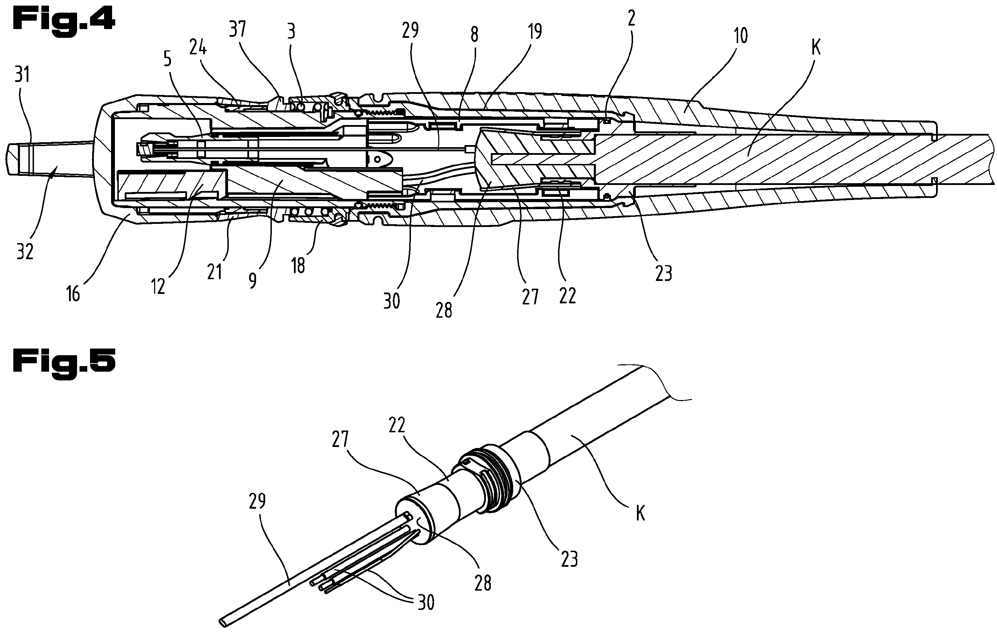

An der Rückseite, dem Ende der Halbschalen 8, welches dem Halteelement 9 entgegengesetzt ist, ist die Zugentlastungshülse 23 angeordnet und stützt sich über die Halbschalen 8 am vorderen Ende der Spannhülse 19 ab. An der Zugentlastungshülse 23 wieder stützt sich eine sich trichterförmig auf das Gehäuse 6 hin öffnende Hülse 22 ab, wobei dieser trichterförmige Abschnitt 27 über zumindest einen Teil der Länge der Hülse 22 in deren vorderem Teil ausgebildet ist. Auch sind Ausführungsformen möglich, bei welchen eine zylindrische Hülse an der Zugentlastungshülse 23 abgestützt ist und sich eine komplett trichterförmige Hülse als separater Bauteil an der zylindrischen Hülse anliegt und sich somit mittelbar an der Zugentlastungshülse 23 abstützt. Die Litzen 30, Fasern 29, Zugentlastungselemente od. dgl. des Kabels K sind durch diese Hülse 22 oder jede andere gleichartige Hülsenanordnung hindurchgeführt und nach vorne ins Gehäuse 6 geführt und sind darüber hinaus in zumindest dem zylindrischen Abschnitt der Hülse 22 fixiert. Vorzugsweise ist ein allfälliger Schirm des Kabels K aber mit dem trichterförmigen Abschnitt 27 der Hülse 22 beispielsweise durch Vercrimpen verbunden. Für die übrigen Elemente des Kabels K erfolgt deren Fixierung in der Hülse 22 bevorzugt dadurch, dass der Innenraum zumindest des trichterförmigen Abschnitts 27 der Hülse 22 mit einem ausgehärteten Kunstharz 28 verfüllt ist. Eine bevorzugte Ausführungsform sieht vor, dass der gesamte Innenraum der trichterförmiger Hülse 22 und zumindest auch ein Teil der Zugentlastungshülse 23 mit dem ausgehärteten Kunstharz 28 verfüllt ist (siehe Fig. 4 und Fig. 5). Damit die Verwendung von Zugentlastungselementen auch aus nichtmetallischen Werkstoffen möglich, was bei medizinischen Anwendungen von Vorteil ist.

Als Material für die Verfüllung der Hülse 22 wird bevorzugt Epoxyharz verwendet, es können aber auch andere Reaktionsharze wie beispielsweise ungesättigte Polyesterharze, PUR-Giessharze, Aminoplaste oder Phenoplaste eingesetzt werden. Weitere Ausführungsformen können vorsehen, dass der Kunstharzverguss über die Hülse 22 hinaus ausgedehnt ist und grössere Volumina innerhalb des Gehäuses 6 und allenfalls auch der Spannhülse 19 ausfüllt. Da alle Elemente 29, 30 des Kabels K, einschliesslich der Zugentlastungselemente, in der Hülse 22 und allenfalls zusätzlich auch in der Zugentlastungshülse 23 fixiert sind, können die Innenseiten der Halbschalen 8 frei von Halteelementen bleiben, was den Zusammenbau natürlich wesentlich erleichtert. Die trichterförmige Hülse 22 ist dann allein über die Zugentlastungshülse 23 an der äusseren Hülse aus den beiden Halbschalen 8 abgestützt.

Die oben beschriebene Zugentlastungsanordnung kann zur Gänze an oder in der Spannhülse 19 angeordnet sein, oder kann im Übergangsbereich zwischen Gehäuse 6 und Spannhülse 19 positioniert sein.

Ein Rückschlussring 7 und eine ringartig geformte Spiralfeder 2 zur EMV Abschirmung befinden sich ebenfalls zwischen der Zugentlastungsanordnung 8, 22, 23 und der Spannhülse 19. Bei Zusammenschrauben oder anderweitigen Verbinden von Gehäuse 6 und Spannhülse 19 wird diese Spiralfeder 2 axial belastet, kippt dadurch in Umfangsrichtung um und bildet dadurch den optimalen EMV Schutz für den Spalt zwischen Gehäuse 6 und Spannhülse 19.

In Fig. 4 ist noch eine andere Ausführungsform der Abdeckkappe 16 zu sehen, die bevorzugt für medizinischen Anwendungen zum Einsatz kommt. Eine weiter nach vorne abstehende Lasche 31 umgibt eine Öffnung 32, durch die ein Benutzer mit dem Finger, auch einem behandschuhten Finger, hindurchgreifen und die Abdeckkappe 16 einfach und rasch abnehmen kann.

In Fig. 5 ist nochmals in einem isolierten Detail dargestellt, wie das durch einen allfälligen Knickschutz 10 und die Spannhülse 19 die Kabeltülle 19 hindurchgeführte Kabel K bis zur Zugentlastungshülse 23 geführt ist. Durch diese Hülse 23 hindurch weiter nach vorne, durch die sich trichterförmig öffnende Hülse 22 und in das Gehäuse 6 werden dann aufgespaltet nur noch die einzelnen Elemente 29, 30 des Kabels K geführt. Diese Elemente 29, 30 sind im Kunstharzverguss 28 fest fixiert, ebenso wie ein allfälliger Schirm des Kabels K.

Fig. 5 zeigt weiters, wie die optischen Leiter 29 in das Halteelement 9 für die Enden der Lichtleiter 29 geführt werden und wie die elektrischen Leiter 30 ebenso in dieses Halteelement 9 geführt sind. Bevorzugt ist der Kontaktträger-Bereich des Halteelementes 9 durch den Kontaktträger 12 nach vorne hin verlängert. Die Anzahl der Lichtleiter und der elektrischen Leiter ist im Prinzip beliebig und ist deren Maximalanzahl nur durch die Dimensionen des Steckverbinderteils begrenzt.

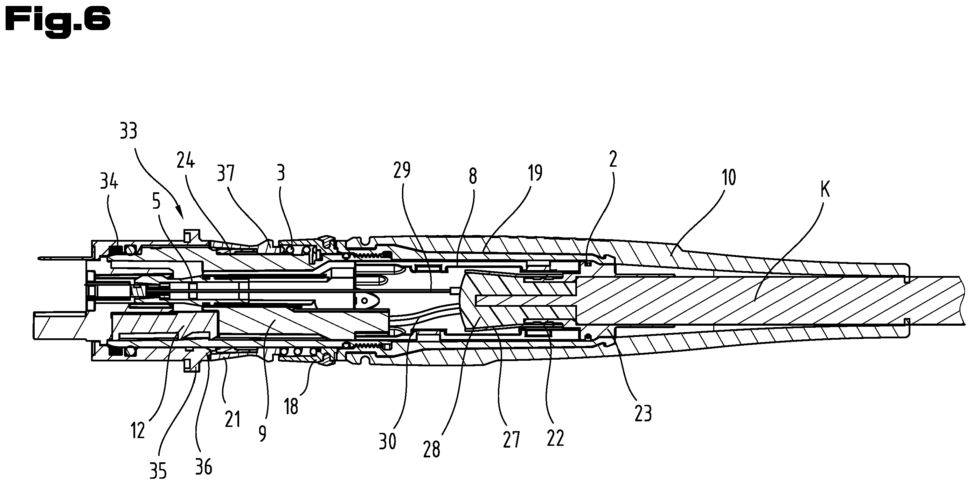

Fig. 6 zeigt ebenfalls einen Längsschnitt, wobei hier allerdings der erfindungsgernässe Steckverbinderteil in Form eines Kabelsteckers mit einem korrespondierenden Steckverbinderteil in Form einer Chassisbuchse zu einer Steckverbindung verbunden wurde. Der vordere Abschnitt des Gehäuses 6 ist in die Einstecköffnung des Steckverbinderteils 33 eingeschoben worden. Dessen vorderer Rand 36 erhebt sich nur ganz wenig über die Ebene der Flanschplatte 35, was insbesondere für Geräte im medizinischen Bereich vorteilhaft ist, um ein Hängenbleiben an diesem Rand 36 weitestgehend zu vermeiden.

Auch im komplementären Steckverbinderteil 33 ist eine ringförmig geformte Spiralfeder 34 eingesetzt, die durch das vordere Ende des eingesteckten Gehäuses 6 axial belastet und dabei umgekippt wird. Damit ist auch auf der Seite des Steckverbinderteils 33 die optimale EMV Abschirmung sichergestellt. Zusammen mit der EMV-Abschirmung durch die Spiralfeder 2 des anderen Steckverbinderteils am Ende des Kabels K ist damit die optimale Abschirmung des Bereiches der Steckverbindung gewährleistet, in welchem die optische und elektrische Kontaktierung stattfindet.

In der in Fig. 6 gezeigten verbundenen und verriegelten Stellung stehen die elektrischen Kontakte 1 und 11 im vorderen Ende des Gehäuses 6 mit entsprechenden elektrischen Kontakten des Steckverbinderteils 33 in elektrisch leitender Verbindung. Das Halteelement 9 für vorzugsweise die Lichtleiter 29 liegt mit seiner Kontaktfläche unmittelbar an einer Kontaktfläche eines Lichtleiterträgers des Steckverbinderteils 33 an. Hierdurch kommen die in den Kontaktflächen angeordneten offenen Enden der Lichtleiter in lichtleitende Verbindung, sodass optische Signale über diese Verbindung transportiert werden können.

Der Ordnung halber sei abschliessend darauf hingewiesen, dass zum besseren Verständnis des Aufbaus Elemente teilweise unmassstäblich und/oder vergrössert und/oder verkleinert dargestellt wurden.

### Bezugszeichenaufstellung

| | | | |
|---|---|---|---|
| 1 | Adapterkontakt | 36 | Rand Einstecköffnung |
| 2 | Ringfeder | 37 | Rand Entriegelungring |
| 3 | Vorspannfeder | 38 | Crimphülse |
| 4 | Einsatz für Schutzkappe | 39 | |
| 5 | Kontaktträger optisch | 40 | |
| 6 | Gehäuse | 41 | |
| 7 | Rückschlussring | | |
| 8 | Halbschale | 42 | |
| 9 | Halteelement | 43 | |
| 10 | Knickschutz | 44 | |
| | | 45 | |
| 11 | Kontakt | | |
| 12 | Kontaktträger elektrisch | 46 | |
| 13 | Dichtring | | |
| 14 | Rastring | 48 | |
| 15 | Crimphülse | 49 | |
| | | 50 | |
| 16 | Schutzkappe | | |
| 17 | Haltevorsprung | 51 | |
| 18 | Sperrring | 52 | |
| 19 | Spannhülse | 53 | |
| 20 | Befestigungselement | 54 | |
| | | 55 | |
| 21 | Entriegelungsring | | |
| 22 | Trichterhülse | 56 | |
| 23 | Zugentlastungshülse | 57 | |
| 24 | Zughülse | 58 | |
| 25 | Fixe Verzahnung | 59 | |
| | | 60 | |
| 26 | Verzahnung Sperrring | | |
| 27 | Trichterförmiger Abschnitt | 61 | |
| 28 | Kunstharzverguss | 62 | |
| 29 | Litzen | 63 | |
| 30 | Lichtleiter | 64 | |
| | | 65 | |
| 31 | Lasche Schutzkappe | | |
| 32 | Öffnung Lasche | | |
| 33 | Chassisbuchse | | |
| 34 | Ringfeder | | |
| 35 | Flanschplatte | | |

## Patentansprüche

1. Steckverbinderteil für eine optische und/oder elektrische Steckverbindung, welches zumindest ein Gehäuse (6) für die optischen und/oder elektrischen Kontaktelemente und deren Träger (5, 12) und zumindest eine Spannhülse (19) aufweist, die mittels einer lösbaren Schraubverbindung miteinander verbunden sind, wobei innerhalb des Gehäuses (6) und/oder der Spannhülse (19) eine Zugentlastungsanordnung (8, 22, 23) für ein in den Steckverbinderteil geführtes Kabel (K) angeordnet ist, die eine Zugentlastungshülse (23) aufweist, die sich an einer äusseren Hülse (8) abstützt, **dadurch gekennzeichnet, dass** die Zugentlastungsanordnung (8, 22, 23) eine sich nach vorne hin zumindest über einen Teil (27) ihrer Länge trichterförmig öffnende Hülse (22) aufweist, durch welche die Litzen (29) oder Fasern (30) des Kabels (K) hindurchgeführt und darin fixiert sind.

2. Steckverbinderteil nach Anspruch 1, **dadurch gekennzeichnet, dass** die sich trichterförmig öffnende Hülse (22) an der Vorderseite der Zugentlastungshülse (23) aufgesetzt und daran abgestützt ist.

3. Steckverbinderteil nach Anspruch 1 oder 2, **dadurch gekennzeichnet, dass** der Innenraum zumindest des trichterförmigen Abschnitts (27) der Hülse (22) mit einem ausgehärteten Kunstharz (28) verfüllt ist.

4. Steckverbinderteil nach Anspruch 3, **dadurch gekennzeichnet, dass** der gesamte Innenraum der Hülse (22) und zumindest ein Teil der Zugentlastungshülse (23) mit einem ausgehärteten Kunstharz (28) verfüllt ist.

5. Steckverbinderteil nach Anspruch 3 oder 4, **dadurch gekennzeichnet, dass** das Kunstharz (28) aus der Gruppe der Reaktionsharze gewählt ist, wobei bevorzugt Epoxyharz gewählt ist.

6. Steckverbinderteil nach einem der Ansprüche 1 bis 5, **dadurch gekennzeichnet, dass** die Hülse (22) über die Zugentlastungshülse (23) an der äusseren Hülse (8) abgestützt ist.

7. Steckverbinderteil nach einem der Ansprüche 1 bis 6, **dadurch gekennzeichnet, dass** ein allfälliger Schirm des Kabels (K) mit dem trichterförmigen Abschnitt (27) der Hülse (23) fest verbunden ist, vorzugsweise durch Vercrimpen.

8. Steckverbinderteil nach einem der Ansprüche 1 bis 7, in einer Ausführung als Kabelstecker für optische und/oder elektrische Kabel, dessen Gehäuse zur Herstellung einer Steckverbindung mit einem komplementären Steckverbinderteil, vorzugsweise einer Chassisbuchse, ausgeführt ist.

## Claims

1. A plug connector part for an optical and/or electrical plug connection, which comprises at least a housing (6) for the optical and/or electrical contact elements and their carriers (5, 12) and at least a clamping sleeve (19), which are connected to one another by means of a releasable screw connection, wherein a strain relief arrangement (8, 22, 23) for a cable (K) guided in the plug connector part is arranged inside the housing (6) and/or the clamping sleeve (19), which strain relief arrangement (8, 22, 23) comprises a strain relief sleeve (23), which is supported on an outer sleeve (8), **characterized in that** the strain relief arrangement (8, 22, 23) comprises a sleeve (22) opening toward the front in a funnel-shaped manner at least over a part (27) of its length, through which sleeve (22) the litz wires (29) or fibers (30) of the cable (K) are guided and fixed therein.

2. The plug connector part according to claim 1, **characterized in that** the sleeve (22) opening in a funnel-shaped manner is placed on the front side of the strain relief sleeve (23) and supported thereon.

3. The plug connector part to claim 1 or 2, **characterized in that** the interior of at least the funnel-shaped section (27) of the sleeve (22) is filled with a cured synthetic resin (28).

4. The plug connector part according to claim 3, **characterized in that** the entire interior of the sleeve (22) and at least a part of the strain relief sleeve (23) is filled with a cured synthetic resin (28).

5. The plug connector part according to claim 3 or 4, **characterized in that** the synthetic resin (28) is selected from the group of reaction resins, wherein preferably epoxy resin is selected.

6. The plug connector part according to one of claims 1 to 5, **characterized in that** the sleeve (22) is supported on the outer sleeve (8) via the strain relief sleeve (23).

7. The plug connector part according to one of claims 1 to 6, **characterized in that** a possible shield of the cable (K) is firmly connected to the funnel-shaped section (27) of the sleeve (23), preferably by means of crimping.

8. The plug connector part according to one of claims 1 to 7, in an embodiment as a cable plug for optical and/or electrical cables, whose housing is designed for establishing a plug connection to a complementary plug connector part, preferable a chassis socket.

## Revendications

1. Pièce de connecteur enfichable pour une connexion enfichable optique et/ou électrique, présentant au moins un boîtier (6) pour les contacts optiques et/ou électriques et leurs supports (5, 12) et au moins un manchon de serrage (19) qui sont liés l'un à l'autre par une liaison vissée démontable, un dispositif réducteur de traction (8, 22, 23) pour un câble (K) guidé dans ladite pièce de connecteur enfichable étant disposé dans ledit boîtier (6) et/ou ledit manchon de serrage (19) et présentant un manchon réducteur de traction (23) qui s'appuie contre un manchon extérieur (8) ; **caractérisée en ce que** ledit dispositif réducteur de traction (8, 22, 23) présente un manchon (22) s'ouvrant en entonnoir vers l'avant sur au moins une partie (27) de sa longueur, au travers duquel les torons (29) ou les fibres (30) du câble (K) sont guidés et fixés.

2. Pièce de connecteur enfichable selon la revendication 1, **caractérisée en ce que** le manchon (22) s'ouvrant en entonnoir est placé à l'avant du manchon réducteur de traction (23) et s'appuie sur celui-ci.

3. Pièce de connecteur enfichable selon la revendication 1 ou 2, **caractérisée en ce que** l'espace intérieur du manchon (22) est rempli de résine synthétique (28) durcie au moins dans sa partie en entonnoir (27).

4. Pièce de connecteur enfichable selon la revendication 3, **caractérisée en ce que** la totalité de l'espace intérieur du manchon (22) et au moins une partie du manchon réducteur de traction (23) sont remplis de résine synthétique (28) durcie.

5. Pièce de connecteur enfichable selon la revendication 3 ou 4, **caractérisée en ce que** la résine synthétique (28) est choisie dans le groupe des résines réactives, une résine époxyde étant choisie de préférence.

6. Pièce de connecteur enfichable selon l'une des revendications 1 à 5, **caractérisée en ce que** le manchon (22) s'appuie sur le manchon extérieur (8) par l'intermédiaire du manchon réducteur de traction (23).

7. Pièce de connecteur enfichable selon l'une des revendications 1 à 6, **caractérisée en ce qu'**un éventuel blindage du câble (K) est solidement lié à la partie en entonnoir (27) du manchon (23), de préférence par sertissage.

8. Pièce de connecteur enfichable selon l'une des revendications 1 à 7, réalisée sous forme de connecteur de câble pour câbles optiques et/ou électriques, dont le boîtier est réalisé de manière à former une connexion enfichable avec une pièce complémentaire de connexion enfichable, de préférence un connecteur femelle à montage sur châssis.
